# EUROPÄISCHE PATENTANMELDUNG

(11) **EP 1 489 408 A1**
(43) Veröffentlichungstag der Anmeldung: **22.12.2004**
(21) Anmeldenummer: 04013342.3
(22) Anmeldetag: 07.06.2004
(51) Int. Cl.: G01N 27/414

(54) **Verfahren und Sensor zum Bestimmen eines chemischen Elements**

(30) Priorität: 12.06.2003 DE 10326476
(71) Anmelder: Micronas GmbH, 79108 Freiburg (DE)
(72) Erfinder: Lehmann, Mirko, Dr., 79102 Freiburg (DE)
(74) Vertreter: Göhring, Robert

(57) **Zusammenfassung**

Sensor zum Bestimmen eines chemischen Elementes bzw. Verfahren zum Steuern eines solchen Sensors.

Sensor (1) zum Bestimmen eines chemischen Elementes oder einer chemischen Verbindung (CO₂) in einem zugeführten gasförmigen Medium mit
- einem Reaktionsbereich (9), auf und/oder in dem das Element bzw. die Verbindung eine chemische Reaktion bewirkt, welche eine charakteristische Größe (z.B. die Austrittsarbeit) des Reaktionsbereichs (9) ändert,
- einem Sensorelement (5), das in dem Sensor (1) zum Erfassen der Änderung der charakteristischen Größe angeordnet ist,
- einem Signalausgang (11), an dem als Messgröße ein Ausgangssignal (U_{DS}) entsprechend der vom Sensorelement erfassten chemischen Reaktion abgreifbar ist, und
- einer Reaktions-Steuereinrichtung (SC,12) mit einer Elektrodenanordnung (10,13) zum Anlegen einer Steuerspannung zum Beeinflussen einer Reaktion im Reaktionsbereich (9).

Eine Oberflächentopologie wird derart dimensioniert ausgebildet, dass im Betrieb ein Feuchtefilm (16) aus niedergeschlagener Umgebungsfeuchte den Oberflächenbereich sowohl der Elektrodenanordnung als auch des Reaktionsbereichs durchgehend überzieht. Möglich sind insbesondere eine Korrektur von Langzeitveränderungen durch den Einfluss von Umgebungsgasen, eine Überprüfung der Sondenfunktionalität und eine gezielte Einstellung zur Messung bestimmter chemischer Messgrößen.

## Beschreibung

Die Erfindung bezieht sich auf einen Sensor zum Bestimmen eines chemischen Elementes oder einer chemischen Verbindung in einem gasförmigen Medium mit den oberbegrifflichen Merkmalen des Patentanspruchs 7 bzw. auf ein Verfahren zum Steuern eines derartigen Sensors.

Zum Bestimmen eines chemischen Elementes oder einer chemischen Verbindung in einem Gas oder Fluid sind allgemein Sensoren bekannt, welche eine Sensorschicht aufweisen, an und/oder in der das Element bzw. die Verbindung eine chemische oder physikalische Reaktion erzeugt. Das Ausgangssignal ist dabei üblicherweise ein elektrisches Signal, welches durch eine reversible gasinduzierte Änderung einer charakteristischen Größe des sensitiven Materials der Sensorschicht erzeugt wird.

Aus DE 100 28 692 C2 ist ein Verfahren zur Untersuchung von Membran umschlossenen Biokompartimenten bekannt. Dabei wird eine solche Biokompartimente enthaltende Flüssigkeit durch eine Sensorvorrichtung geleitet. Die Sensorvorrichtung weist dabei im Boden einer Messkammer mehrere Ionen-selektive Feldeffekttransistoren auf. Diese weisen ein aus einem Halbleitermaterial bestehendes Substrat auf, in welchem für Drain und Source hochdotierte Zonen mit einem zum Substrat entgegengesetzten Leistungstyp angeordnet sind. Zwischen Drain und Source ist ein Gate angeordnet. Gate, Drain und Source sind über eine darüber befindliche Silizium-Nitrit-Schicht gegen die Messkammer elektrisch isoliert. Die Silizium-Nitrit-Schicht bildet an ihrer dem Gate abgewandten Außenseite eine aktive Sensorschicht, über die der Feldeffekttransistor mittels dort in einem Kulturmedium befindlichen Wasserstoff-Ionen steuerbar ist. Mittels des Feldeffekttransistors wird ein Ausgangssignal erzeugt, welches etwa proportional zum pH-Wert des Kulturmediums ist.

Dicht benachbart zu dem Gate ist eine Arbeitselektrode als Steuerelektrode (Guardring) angeordnet, welche das Gate ringförmig umgrenzt. Der Arbeitselektrode ist eine Referenzelektrode zugeordnet, welche im Kulturmedium mit Abstand zu den Feldeffekttransistoren in der Flüssigkeitsableitung angeordnet ist. Arbeitselektrode und Referenzelektrode bilden eine Elektrodenanordnung zum Anlegen einer Steuerspannung an die Flüssigkeit, welche die Messkammer durchströmt. Ziel dieser Anordnung ist u.a. die indirekte Messung der Atmungsaktivität der Biokompartimente durch das Anlegen verschiedener Arbeitsspannungen an diese Elektrodenanordnung und Messung entsprechend veränderter pH-Messwerte mit Hilfe des Feldeffekttransistors.

Allgemein bekannt sind Sensoren, bei denen durch die chemische oder physikalische Reaktion eine Änderung der Austrittsarbeit des sensitiven Materials geschieht.

Durch die benachbarte Anordnung des sensitiven Materials, typischerweise mit einem Abstand von weniger als 5µm, oder eine elektrische Ankopplung an dem Gate einer Feldeffekttransistor-Struktur beeinflusst die Änderung der Austrittsarbeit den Source-Drain-Strom des Feldeffekttransistors, sofern der Strom nicht durch andere elektrische Maßnahmen konstant gehalten wird (Suspended Gate FETs=SGFETs). Derartige Sensoren sind, wenn sie in Flüssigkeiten eingesetzt werden auch als ionensensitive Feldeffekttransistoren (ISFET) bekannt. Vom Grundprinzip her ist ein ISFET ähnlich einem Feldeffekttransistor mit einer Metallelektrode zur Steuerung aufgebaut, wobei die Steuerung beim ISFET jedoch nicht mittels der Metallelektrode sondern über eine aus einer ionensensitiven Schicht, Elektrolyt und Referenzelektrode bestehenden Anordnung erfolgt. Derartige ISFETs werden üblicherweise als pH-Sensoren verwendet können aber auch als Transducer für SGFETs eingesetzt werden (siehe DE 19956744C2). Ebenso kann bei einer SGFET Anordnung das Signal von einer Elektrode auf einen Transistor kapazitiv übertragen werden, wobei der Transistor nicht gegenüber des sensitiven Materials angeordnet sein muß (Capacitive Controlled FET; CCFET)(siehe DE4333875C2).

Allgemein bekannt sind zwei verschiedene Gas-Sensoranordnungen. Bei der ersten Sensoranordnung passiert die Sensorreaktion an der Sensorschicht, die durch einen Luftspalt vom Transducer (ISFET,CCFET) beabstandet ist. Bei der zweiten Sensoranordnung passiert die Sensorreaktion an der Sensorschicht, die direkt auf dem ISFET bzw. CCFET liegt.
Während das sensitive Material der Sensorschicht üblicherweise langzeitbeständig gegenüber Umgebungsluft ist, ändert sich trotzdem im Langzeitbetrieb oftmals der pH-Wert eines natürlichen Feuchtefilms auf der Oberfläche durch die Einwirkung von Umgebungsgasen. Mit der Änderung des pH-Wertes des Feuchtigkeitsfilms auf der Oberfläche ändern sich auch die durch ihn vermittelten gassensitiven Reaktionen und somit das Sensorverhalten, so dass über einen längeren Messvorgang hinweg eine Verfälschung der Messgröße auftritt.

Die Aufgabe der Erfindung besteht darin, ein Verfahren und einen Sensor zum Bestimmen eines chemischen Elementes oder einer chemischen Verbindung in einem zugeführten Gas oder Fluid hinsichtlich bereitzustellen.

Diese Aufgabe wird durch einen Sensor zum Bestimmen eines chemischen Elementes oder einer chemischen Verbindung in einem zugeführten Gas oder Fluid mit den Merkmalen des Patentanspruchs 7 bzw. durch ein Verfahren zum Bestimmen eines chemischen Elementes oder einer chemischen Verbindung mit den Merkmalen des Patentanspruchs 1 gelöst.

Vorteilhaft ist insbesondere ein Verfahren zum Bestimmen eines chemischen Elementes oder einer chemischen Verbindung in einem gasförmigen Medium, welches einem Sensor zum Erfassen einer Veränderung in einem Reaktionsbereich zugeführt wird, wenn dadurch die chemische Zusammensetzung in dem Reaktionsbereich des Sensors durch das Anlegen oder Ändern einer Steuerspannung an einem Feuchtefilm über und/oder in dem Reaktionsbereich aktiv geändert wird.

Die Bereitstellung eines Sensors zum Bestimmen eines chemischen Elementes oder einer chemischen Verbindung in einem zugeführten gasförmigen Medium ist besonders vorteilhaft, wenn der Sensor ausgestattet ist mit einem Reaktionsbereich, auf und/oder in dem das Element bzw. die Verbindung eine chemische Reaktion bewirkt, welche eine charakteristische Größe des Reaktionsbereichs ändert, einem Sensorelement, das in dem Sensor zum Erfassen der Änderung der charakteristischen Größe angeordnet ist, einem Signalausgang, an dem als Messgröße ein Ausgangssignal entsprechend der vom Sensorelement erfassten chemischen Reaktion abgreifbar ist, und einer Reaktions-Steuereinrichtung mit einer Elektrodenanordnung zum Anlegen einer Steuerspannung zum Beeinflussen einer Reaktion im Reaktionsbereich, wobei eine Oberflächentopologie und Oberflächenchemie derart dimensioniert bzw. ausgebildet ist, dass im Betrieb ein Feuchtefilm aus niedergeschlagener Feuchte den Oberflächenbereich sowohl der Elektrodenanordnung als auch des Reaktionsbereichs durchgehend überzieht. Hierbei ist zu beachten, dass sich im allgemeinen auf hydrophoben Oberflächen dünnere Feuchtefilme befinden als auf hydrophilen, so dass eine hydrophile Oberfläche für einen Konatkt zwischen dem Reaktionsbereich und der Elektrodenanordnungen bevorzugt wird. Die Oberflächentopologie/Chemie ermöglicht mit der entsprechenden Dimensionierung einen durchgehenden Feuchtefilm, ohne den bei beispielsweise zu großen Stufen zwischen einzelnen Topologiehöhenstufen keine ausreichende Leitfähigkeit bestehen würde, so dass eine Steuerung der chemischen Eigenschaften in dem sensitiven Bereich nicht möglich wäre.

Ausgenutzt wird bei dem Sensor und dem Verfahren zum Bestimmen eines chemischen Elements die Erkenntnis, dass durch den Kontakt eines Feuchte enthaltenden Gasgemischs mit der Oberfläche der Sensorschicht auf der Oberfläche bei Temperaturen von Raumtemperaturen bis typischerweise 100°C ein Feuchtefilm entsteht, der für eine chemische Umsetzung in diesem ausreicht.
Der Feuchtefilm, der sich auf Oberflächen niedersetzt liegt dabei üblicherweise im nm-Bereich. Unter einem gasförmigen Medium wird entsprechend insbesondere ein Feuchte enthaltendes Gasgemisch verstanden, d. h. ein feuchtes Gas bzw. Fluid.

Im einfachsten Fall reicht es aus, wenn sich der Feuchtefilm über den Oberflächenbereich zwischen zumindest zwei Elektroden und dem Reaktionsbereich durchgehend erstreckt.

Neben einer Stabilisierung der Sensorschicht im Langzeitbetrieb bzw. zur Korrektur von pH-Wert-Abweichungen des Feuchtefilms durch den Einfluss von Umgebungsgasen sind auch aktive Verschiebungen der charakteristischen Größe möglich. Dies ermöglicht einerseits Überprüfungen der generellen Funktionalität des Sensors und andererseits auch den Einsatz des Sensors zum Bestimmen verschiedenartiger chemischer Elemente oder Verbindungen. Entsprechende Verfahrensweisen bei der Ansteuerung einer derartigen Sensorschicht-Steuereinrichtung bewirken entsprechend Korrekturen im Langzeitbetrieb, Überprüfungen oder die Einsatzmöglichkeit für verschiedene chemische Elemente bzw. Verbindungen.

Vorteilhafte Ausgestaltungen sind Gegenstand abhängiger Ansprüche.

Die Ausbildung der Steuereinrichtung als Stabilisierungseinrichtung bzw. eine entsprechende Verfahrensweise führt zu einer Änderung der chemischen Zusammensetzung der Sensorschicht auf elektrochemischem Wege, so dass die charakteristische Größe auch beim Langzeitbetrieb auf einem konstanten Niveau gehalten werden kann, um beispielsweise die Einwirkung von Umgebungsgasen zu neutralisieren. Durch beispielsweise Konstanthalten des pH-Wertes in dem Feuchtefilm wird sichergestellt, dass das Ausgangssignal stets in direktem Verhältnis zu der Menge des chemischen Elementes bzw. der chemischen Verbindung des Gases oder Fluids steht, welches der Sensorschicht zugeführt wird.

Die Ausbildung der Sensorschicht-Steuereinrichtung als Prüfeinrichtung bzw. eine entsprechende Verfahrensweise nutzt eine bewusste Änderung der charakteristischen Größe, insbesondere des pH-Wertes, bei ansonsten konstanten Umgebungsbedingungen aus, um einen, zwei oder vorzugsweise eine Vielzahl von Messwerten zu erhalten, so dass die entsprechenden Ausgangssignale bezüglich einer möglicherweise fehlerhaften Funktion der Sensorschicht untersucht werden können. Vorteilhafterweise kann ein derart bestimmter Prüfwert oder eine entsprechende Abfolge von Prüfwerten auf einfache Art und Weise mit entsprechenden Referenzwerten verglichen werden, welche in einem Speicher hinterlegbar sind.

Vorteilhaft ist auch die Ausbildung der Sensorschicht-Steuereinrichtung als Sensitivitätseinstellungseinrichtung bzw. eine entsprechende Verfahrensweise, wobei die charakteristische Größe, insbesondere der pH-Wert, aktiv elektrochemisch auf einen Wert eingestellt wird, der eine gewünschte Sensitivität der Sensorschicht für ein bestimmtes chemisches Element oder eine bestimmte chemische Verbindung festlegt. Dadurch wird der Sensor für die Bestimmung verschiedenartiger chemischer Elemente oder Verbindungen einsetzbar. Auch für die Sensitivitätseinstellung ist die Bereitstellung entsprechender Referenzwerte in einem Speicher vorteilhaft.

Ausführungsbeispiele der Erfindung werden nachfolgend anhand der Zeichnung näher erläutert. Es zeigen:
- Fig. 1A, 1B: schematisch für das Verständnis erforderliche Komponenten eines Sensors zum Bestimmen eines chemischen Elementes in einem Gas;
- Fig. 2A: ein Ablaufdiagramm zur Verdeutlichung einer Stabilisierungssteuerung für einen solchen Sensor;
- Fig. 2B: ein Ablaufdiagramm zum Verdeutlichen eines Verfahrensablaufs zum Überprüfen der Funktionalität eines solchen Sensors;
- Fig. 2C: ein Ablaufdiagramm zum Verdeutlichen der Verfahrensweise bei der Einstellung der Sensitivität eines solchen Sensors sowie
- Fig. 3: ein Diagramm mit Kurven zur Verdeutlichung einer Reduzierung von Alterungseffekten einer Sensorschicht;
- Fig. 4A, 4B: schematisch zwei besonders einfache Ausführungsformen im Querschnitt;
- Fig. 5A, 5B: zwei alternative Ausführungsformen zur Anordnung der Steuerelektroden und
- Fig. 6A, 6B: in Draufsicht zwei beispielhafte Elektrodenanordnungen.

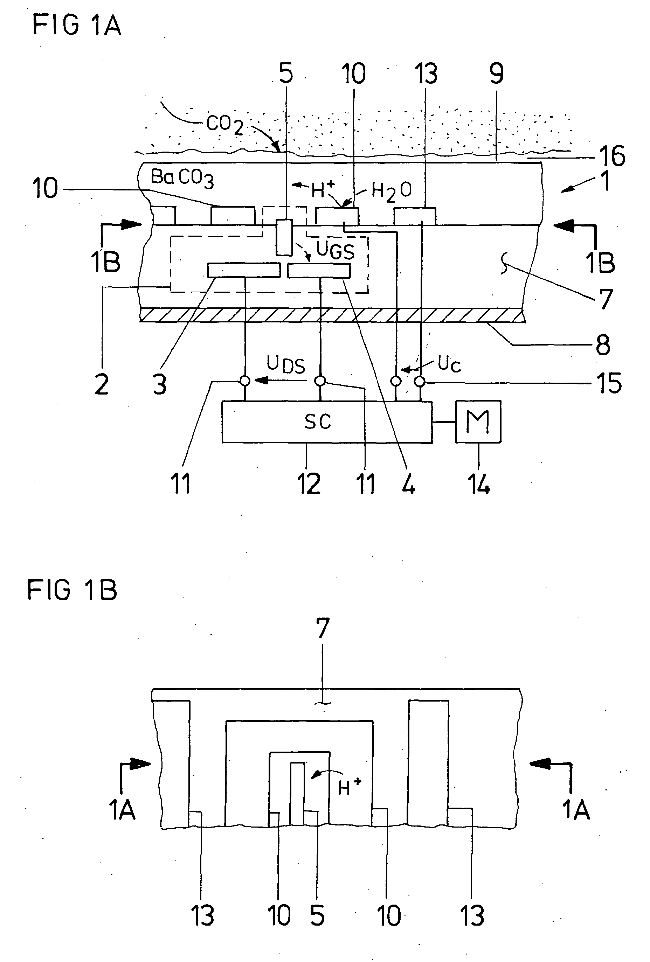

Wie aus Fig. 1A und 1B ersichtlich, besteht ein Sensor zum Bestimmen eines chemischen Elementes oder einer chemischen Verbindung in einem zugeführten Gas oder Fluid aus einer Vielzahl für sich bekannter Bauelemente, von denen nur die für das Grundverständnis erforderlichen Elemente skizziert sind. Insbesondere ist eine Übertragung der nachfolgend beschriebenen Anordnung und Verfahrensweise auf andere Sensoren möglich. Soweit nachfolgend ein chemisches Element als zu bestimmende Größe beschrieben wird, sind darunter auch chemische Verbindungen zu verstehen. Soweit ein Gas beschrieben wird, sind auch Fluide bzw. ein feuchtes Gas angesprochen, welche der Sensorschicht zugeführt werden. Als nachfolgend beschriebene charakteristische Größe, welche als Messgröße einer elektrochemischen Reaktion das Ausgangssignal beeinflusst, wird für verschiedenartige charakteristische Größen der pH-Wert lediglich als Beispiel angegeben.

Dargestellt ist beispielhaft ein Sensor 1 mit einem ionenselektiven Feldeffekttransistor (ISFET) 2. Der ionenselektive Feldeffekttransistor 2 besteht in üblicher Art und Weise aus einem Drain 3, einer Source 4 und einem Gate 5 mit üblicher Verschaltung. Diese sind in einem Isolator oder Halbleitermaterial 7 eingebettet, welches auf einem Träger bzw. Substrat 8 ausgebildet ist. Das Gate 5 ragt im vorliegenden Ausführungsbeispiel aus der Oberfläche des Isolator- bzw. Halbleitermaterials 7 heraus und in eine darauf angeordnete Sensorschicht 9 aus einem sensitiven Material hinein. Zumeist ist dabei die das Gate 5 ausbildende Elektrode sich länglich durch den Übergangsbereich dieser Schichten erstreckend ausgebildet. Das Gate kann jedoch auch im Halbleitermaterial 7 vergraben angeordnet sein. In für sich bekannter Art und Weise ist das Gate 5 von einem Schutz- bzw. Guard-Ring 10 mit einer Breite von beispielsweise 8µm umgeben.

Ein zugeführtes Gas, Fluid oder sonstiges entsprechendes Medium mit beispielsweise CO₂ als zu bestimmendem Gas gelangt bei üblicher Anordnung des Sensors 1 an die freie Oberfläche der porösen Sensorschicht 9 und führt dort bei einem entsprechend gewählten sensitiven Material der Sensorschicht 9 zu einer chemischen Reaktion. Diese chemische Reaktion bewirkt wiederum eine Änderung der Austrittsarbeit in dem sensitiven Material in der Nähe des Gate 5, was wiederum zu einer veränderten Spannung U_{GS} zwischen Gate 5 und Source 4 sowie zu einer veränderten Spannung U_{DS} zwischen Source 4 und Drain 3 führt. Die Spannung U_{DS} zwischen Source 4 und Drain 3 bzw. ein entsprechender Stromfluss dienen als das abgreifbare Ausgangssignal U_{DS} an einem entsprechenden Signalausgang 11 des Sensors 1.

Bei dem Sensor 1 bildet die Sensorschicht 9 somit einen Reaktionsbereich aus, auf und/oder in dem das Element bzw. die Verbindung eine chemische Reaktion bewirkt, welche eine charakteristische Größe des Reaktionsbereichs ändert. Als Sensorelement, welches in dem Sensor zum Erfassen der Änderung der charakteristischen Größe pH angeordnet ist, dient der ISFET, insbesondere dessen Gate 5. Als Elektrodenanordnung einer Reaktions-Steuereinrichtung zum Anlegen einer Steuerspannung zum Beeinflussen einer Reaktion im Reaktionsbereich dienen der Schutz- bzw. Guardring 10 als eine erste Elektrode und eine davon beabstandete Referenz- bzw. Steuerelektrode 13 als eine zweite Elektrode.

Wenn eine oder beide der Elektroden 10, 13 zum Anlegen einer Steuerspannung U_{c} innerhalb des sensitiven Materials angeordnet sind, ist das sensitive Material der Sensorschicht 9 zweckmäßigerweise derart porös und kapillar ausgebildet, dass Wassermoleküle sich auch auf den Oberflächen innerhalb des porösen Materials befinden. Feuchtefilm 16 bezeichnet bei einer porösen Schicht nicht nur den Feuchtefilm auf der äußeren Oberfläche sondern auch den auf den inneren Oberflächen. Um die Funktionalität des Sensors 1 gezielt beeinflussen zu können, wird mit Hilfe einer Sensorschicht-Steuereinrichtung 12/SC die veränderbare Spannung U_{c} an den Guard-Ring 10 angelegt. Zweckmäßigerweise wird dazu die Steuerelektrode 13 dem Guard-Ring 10 benachbart angeordnet, so dass diese eine Elektrodenanordnung zum Anlegen der Steuerspannung U_{c} ausbilden. Bei der dargestellten Ausführungsform befindet sich die Steuerelektrode 13 ebenfalls in der Sensorschicht 9.

Hierzu wird das ohnehin stets vorhandene Wasser H₂O als Feuchtefilm 16 auf und in der Sensorschicht 9 in dem Bereich des Guard-Rings 10 genutzt. Durch das Anlegen einer entsprechenden Steuerspannung U_{c} mit Bewirkung eines relativen positiven oder negativen Stromflusses wird das Wasser in der Sensorschicht oxidiert bzw. reduziert und es entstehen positive Wasserstoff-Ionen H⁺ bzw. negative OH⁻-Ionen. Diese erzeugten Ionen bewirken in der Sensorschicht 9 einen Abfall oder Anstieg des pH-Wertes.

Für die Durchführung der verschiedenen vorteilhaft einsetzbaren Verfahrensweisen ist die Sensorschicht-Steuereinrichtung 12 mit einem Speicher 14/M gekoppelt, in dem neben Algorithmen auch Referenz- und Messwerte abgelegt werden. Möglich ist auch die Bereitstellung eines Steuereingangs 15 zum Anschließen des Guard-Rings 10 und der Steuerelektrode 13 an eine externe Steuereinrichtung.

Der hier beschriebene Sensor betrifft, ohne Beschränkung auf einen solchen Typ, einen beispielhaften Sensortyp zum Einsatz bei Temperaturen von vorzugsweise aber nicht ausschließlich Raumtemperaturen bis typischerweise 100°C, wobei der Sensor 1 in einem Feuchte enthaltenden Gasgemisch oder Fluid betrieben wird. Beim Betrieb ist auf der Oberfläche der Sensorschicht 9 ein Feuchtefilm 16 vorhanden.

Bei der Verwendung von BaCO₃ als sensitivem Material der Sensorschicht 9 handelt es sich beispielsweise um einen Sensor für insbesondere CO₂, wobei zugeführtes CO₂ eine gasinduzierte Änderung des sensitiven Materials bewirkt. Auf BaCO₃ entsteht unter Zufuhr von CO₂ bei einer Feuchtebegasung und bei der Lösung von CO₂ in dem Feuchtefilm 16 auf und in der Oberfläche der Sensorschicht 9 Hydrogencarbonat gemäß

(CO₂ + H₂O + CO₃⁻⁻ → 2HCO₃⁻)

Die sich in diesem Fall als charakteristische Größe ändernde Materialgröße "Austrittsarbeit" hängt in diesem Fall gemäß der Nernst-Gleichung

ΔΦ = kT/2e log[CO₂] + kT/2e log[H₂O] - kT/e log[HCO₃⁻]

von der CO₂-Konzentration ab, wobei k die Bolzmann-Konstante, T die Temperatur und e die Elementarladung darstellt.

Beim Betrieb, d. h. der Zufuhr von CO₂ zu der Sensorschicht 9 über eine längere Zeit bei Raumtemperatur, nimmt jedoch die Sensitivität der Sensorschicht 9 ab. Dies ist durch eine entstehende Ansäuerung des Feuchtefilms 16 auf der Oberfläche der Sensorschicht 9 im Betrieb begründet, wodurch die Löslichkeit von CO₂ drastisch herabgesetzt wird. Letztendlich bewirkt dies veränderte Spannungen zwischen Gate 5 und Source 4 sowie zwischen Source 4 und Drain 3 und somit ein verändertes bzw. verfälschtes Ausgangssignal U_{DS}.

Um die Veränderung bzw. Verschiebung des pH-Wertes des Feuchtefilms 16 zu kompensieren, so dass in dem Feuchtefilm 16 wieder wie zu Messbeginn die Löslichkeit von CO₂ gewährleistet wird, findet eine entsprechende Ansteuerung der Sensorschicht-Steuereinrichtung 12 statt. Durch das Anlegen einer Steuerspannung U_{c} an die Steuerelektrode 13 und den Guard-Ring 10 werden dem Guard-Ring 10 benachbarte oder in diesem befindliche Wassermoleküle H₂O aufgespaltet und positive Wasserstoffionen H⁺ oder OH⁻ - Ionen freigesetzt, welche in die Sensorschicht 9 diffundieren. Die Entstehung von OH- Ionen bewirkt eine Verschiebung des durch die Ansäuerung veränderten pH-Wertes des Feuchtefilms 16 auf der und/oder in der Sensorschicht 9 in den alkalischen Bereich. CO₂ kann wieder im üblichen Maße gelöst werden, womit das am Signalausgang 11 abgreifbare Ausgangssignal U_{DS} wieder den korrekten Wert des CO₂-Gehaltes in dem zugeführten Gas repräsentiert.

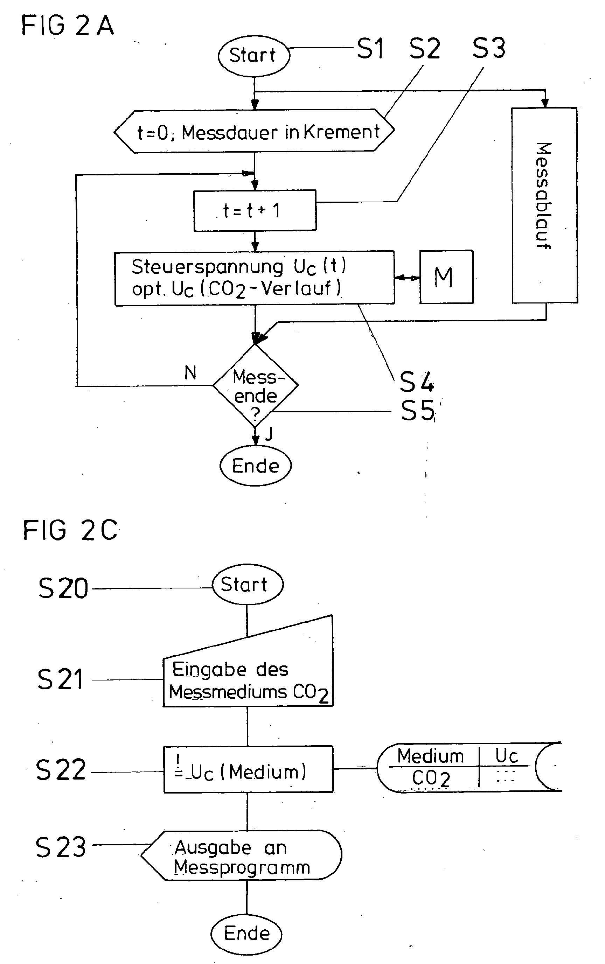

Ein entsprechendes Steuerverfahren zur derartigen Stabilisierung der Sensorschicht 9 mit Hilfe der Sensorschicht-Steuereinrichtung 12 als einer Stabilisierungseinrichtung besteht gemäß Fig. 2A beispielsweise aus einer Abfolge weniger Verfahrensschritte. Nach dem Start S1 des Programmablaufs wird ein Zeitwert t in einem nachfolgenden Schritt S2 auf Null gesetzt und mit fortlaufender Messdauer inkrementiert (S3). Mit fortschreitender Zeit t wird die Steuerspannung U_{c}(t) je nach Bedarf erhöht oder erniedrigt. Vorteilhafterweise können entsprechende Werte für die Steuerspannung U_{c} aus dem Speicher M abgerufen werden. Nach diesem Schritt S4 wird in einem Folgeschritt S5 überprüft, ob der Messzyklus abgeschlossen ist, d. h. das Messende erreicht ist. Falls nein, wird mit einer Inkrementierung der Zeit (S3) und einer erneuten Anpassung der Steuerspannung U_{c} fortgefahren. Falls ja, ist das Ende des Steuerprogramms erreicht.

Vorteilhafterweise kann das beschriebene Steuerprogramm zum Stabilisieren der Sensorschicht 9 bzw. des Feuchtefilms 16 parallel oder als Unterprogramm zu einem Messprogramm durchgeführt werden. Alternativ zu einer Veränderung der Steuerspannung U_{c}(t) kann die Steuerspannung U_{c} auch gemäß anderer Kriterien angepasst werden. Beispielsweise kann eine Mittelung des CO₂-Verlaufs durchgeführt und bei über die Zeit hinweg fortschreitenden gleichmäßigen Veränderungen als Korrekturgröße für die Steuerspannung U_{c} verwendet werden.

Einsetzbar ist dieses Verfahren insbesondere für die Reihe von sensitiven Materialien, für die der Feuchtefilm 16 auf oder in der Sensorschicht 9 für das Zustandekommen der gassensitiven Reaktion entscheidend ist. Derartige sensitive Materialien sind neben den bekannten Metalloxiden vor allem die Salze aus der Gruppe der Karbonate, Phosphate, Halogenide und Nitrate. Mit der Verfahrensweise ist es somit möglich, Einwirkungen von Umgebungsgasen bei einem Langzeitbetrieb mit Veränderung des pH-Wertes des Feuchtefilms 16 zu kompensieren, indem der pH-Wert des Feuchtefilms 16 durch eine gassensitive Reaktion mit Hilfe des Anlegens der Steuerspannung U_{c} an die Steuerelektrode 13 und den Guard-Ring 10 oder eine andere entsprechende Elektrode anstelle des Guard-Rings 10 kompensiert wird.

Bei dem beschriebenen Ausführungsbeispiel wird somit eine elektrochemische Erzeugung oder Vernichtung von Wasserstoffionen H⁺ durchgeführt, um den pH-Wert des Feuchtefilms 16 auf bzw. in der Sensoroberfläche 9 zu beeinflussen, insbesondere konstant zu halten, um ein langzeitstabiles Sensorsignal als Ausgangssignal U_{DS} zu erzielen.

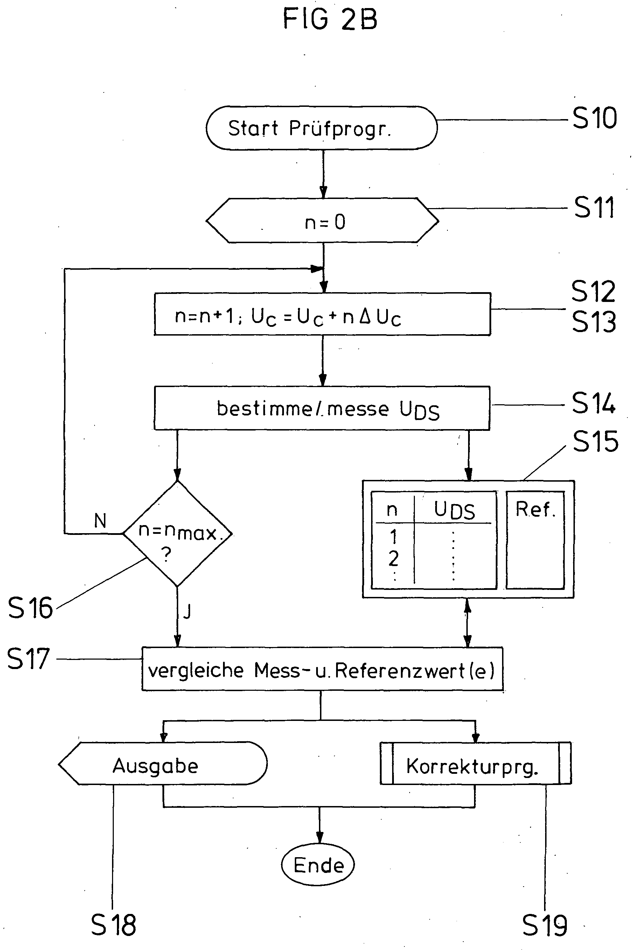

Auf dem gleichen Grundprinzip beruht auch ein Verfahren zum Überprüfen der Funktionalität des Sensors 1 bzw. der Sensorschicht 9 oder eines darauf oder darin befindlichen Feuchtefilms 16 gemäß dem Verfahrensablauf aus Fig. 2B. Dabei wird vorzugsweise von der gleichen Klasse gassensitiver Materialien wie vorstehend beschrieben ausgegangen und ebenfalls eine aktive temporäre Verschiebung des pH-Wertes auf bzw. in der Oberfläche des sensitiven Materials verwendet. Dabei werden die gassensitiven Eigenschaften des Sensormaterials verändert und damit auch die charakteristische gassensitive Größe dieses Materials. Diese Änderung wird dann in das elektrische Ausgangssignal U_{DS} umgewandelt, welches am Signalausgang 11 abgegriffen werden kann. Dieses Ausgangssignal U_{DS} kann auch direkt der Sensorschicht-Steuereinrichtung 12 zugeführt werden.

Die Sensorschicht-Steuereinrichtung 12 mit einer Funktionalität als Prüfeinrichtung verändert kontinuierlich oder schrittweise die Steuerspannung U_{c} zwischen Guard-Ring 10 und Steuerelektrode 13. Außerdem wird die entsprechende Veränderung des Ausgangssignals U_{DS} erfasst. Durch eine Auswertung der Veränderung des Ausgangssignals U_{DS}, insbesondere einen Abgleich mit Referenzwerten in dem Speicher 14 und einer dort hinterlegten Referenztabelle, kann die Sensorschicht-Steuereinrichtung 12 oder bedarfsweise auch eine externe Steuereinrichtung die Funktionalität des Sensors 1 überprüfen.

Bei einer Abweichung der Werte des Ausgangssignals U_{DS} von den vorgegebenen Soll- bzw. Referenzwerten ist von einer fehlerhaften Funktion des Sensors 1 auszugehen. Zweckmäßigerweise wird ein entsprechendes Ergebnis ausgegeben, welches eine Unterbrechung des Messverfahrens oder bei geringen Abweichungen eine Hinweisfunktion auf mögliche Abweichungen signalisiert.

Insbesondere ist es möglich, ein Korrekturprogramm zu starten, welches die ermittelten Fehler korrigiert. Ein solches Korrekturprogramm kann insbesondere bei einer mit zeitlich vorgegebenen Abständen wiederholten Überprüfung des Sensors mit dieser Verfahrensweise auf sich ändernde Ausgangssignale U_{DS} zurückgreifen und entsprechende Korrekturen vornehmen. Für die Durchführung der Korrekturen kann beispielsweise ein Algorithmus gemäß Fig. 2A zur Stabilisierung der Sensorschicht 9 verwendet werden.

Gemäß dem beispielhaften Verfahrensablauf startet der Prüflauf in einem Verfahrensschritt S10. Es folgt das Nullsetzen eines Zählparameters n (S11). Nachfolgend wird der Zählparameter inkrementiert (S12), woraufhin die Steuerspannung U_{c} entsprechend um eine Differenzsteuerspannung ΔU_{c} multipliziert mit dem Korrekturwert n addiert oder subtrahiert wird (S13). Danach wird der durch die veränderten pH-Wert-Bedingungen an bzw. in der Sensorschicht 9 veränderte Wert des Ausgangssignals U_{DS} am Signalausgang 11 bestimmt und zweckmäßigerweise in einer Tabelle dem entsprechenden Korrekturwert n zugeordnet und abgespeichert (S14, S15). Nachfolgend wird überprüft, ob der Korrekturwert n seinen Maximalwert nₘₐₓ erreicht hat (S16). Falls nein, wird in einem Rücksprung und der Erhöhung des Korrekturwertes n fortgeschritten (S12). Falls ja, wird in einem nachfolgenden Schritt (S17) eine Analyse der gemessenen Werte vorgenommen, die dazu aus dem Speicher M ausgelesen werden. Es folgt die Ausgabe des Ergebnisses (S18) insbesondere dann, wenn eine Abweichung festgestellt wurde. Nach der Ergebnisausgabe wird der Algorithmus entweder beendet oder vor der Beendigung ein entsprechendes Korrekturprogramm gestartet.

Neben der Stabilisierung der Sensorschicht oder der Überprüfung der Sensorschicht ist auch eine direkte Beeinflussung der Sensitivität zu anderen Zwecken möglich, wie dies beispielsweise dem Verfahrensalgorithmus aus Fig. 2C entnehmbar ist. Dabei wird wieder von vorzugsweise der gleichen Klasse gassensitiver Materialien wie vorstehend ausgegangen und wiederum eine aktive Verschiebung des pH-Wertes des Feuchtefilms 16 auf oder in der Oberfläche des sensitiven Materials 9 verwendet. Der pH-Wert beeinflusst wiederum die Sensorreaktion und bei einer Verschiebung die Sensitivität der Sensorschicht 9. Dies kann dazu verwendet werden, um mit Hilfe ein und desselben Sensors 1 verschiedene chemische Elemente oder chemische Verbindungen messen zu können.

Beispielsweise kann in einem neutralen Oberflächenwasserfilm CO₂ partiell zu Kohlensäure gelöst werden, wodurch dann z. B. an Karbonaten als Sensormaterial eine gassensitive Reaktion bewirkt wird, welche eine CO₂-Detektion ermöglicht. Wird der pH-Wert dieses Feuchtefilms 16 auf der Oberfläche der Sensorschicht 9 jedoch in den sauren Bereich verschoben, erfolgt keine Lösung von CO₂ mehr im Feuchtefilm 16 der Sensorschicht 9, da Kohlensäure nur eine schwache Säure ist und die Sensitivität bezüglich Kohlensäure zurückgeht. Jedoch kann in diesem Zustand der Sensorschicht 9 z. B. noch NO₂ detektiert werden, welches der Sensorschicht 9 zugeführt wird, da NO₂ das Anhydrid einer starken Säure ist.

Der entsprechende beispielhafte Verfahrensablauf besteht nach dem Start (S20) in der manuellen oder automatischen Eingabe (S21) des zu messenden chemischen Elementes bzw. der zu messenden chemischen Verbindung, d. h. des Messmediums. Nachfolgend (S22) wird eine entsprechende Steuerspannung U_{c} festgelegt, welche zur Verschiebung des pH-Wertes als beispielhafter Messgröße für die Bestimmung des gewünschten chemischen Elementes erforderlich ist. Dazu kann zweckmäßigerweise wieder auf eine entsprechende Tabelle mit einer Gegenüberstellung des Messmediums und der Steuerspannung zurückgegriffen werden, welche beispielsweise in dem Speicher 14 hinterlegt ist. Nach der Festlegung der Steuerspannung U_{c} wird diese an das Messprogramm ausgegeben (S23), welches dann die entsprechende Steuerung mit Hilfe der Sensorschicht-Steuereinrichtung 12 als einer Sensitivitätseinstellungseinrichtung vornimmt. Nachfolgend wird der Algorithmus abgeschlossen.

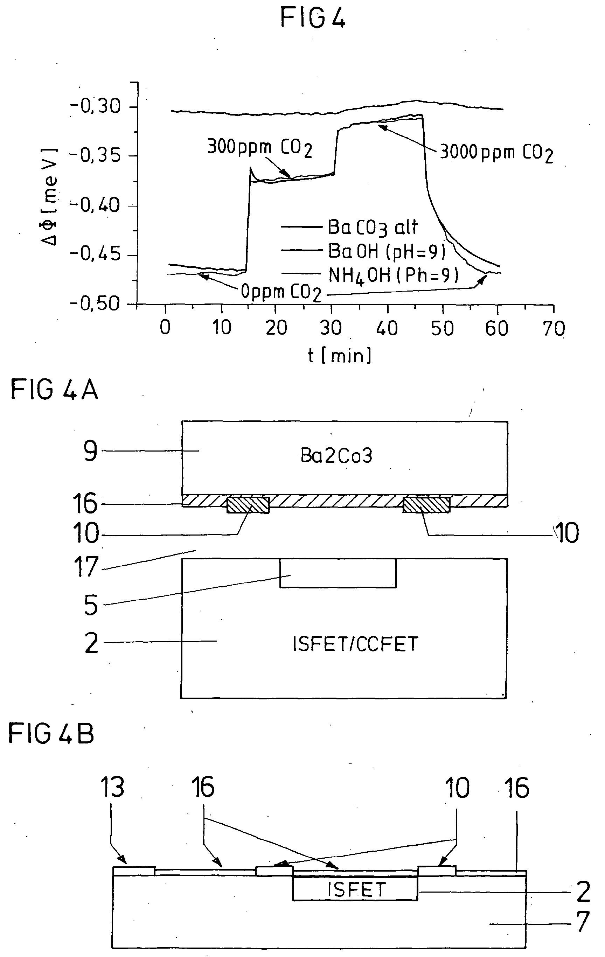

Fig. 3 stellt einen Vergleich von synthetischen Kurven dar, welche eine Korrektur einer Alterungswirkung eines Sensors 1 skizziert, welche mit Hilfe beispielsweise des Stabilisierungsprogramms gemäß Fig. 2 A ausgeglichen werden kann. Im Vergleich zu den Reaktionen einer gealterten Probe auf Basis von BaCO₃ regeneriert die Sensorschicht des Sensors 1 nach einem Gaswechsel von 300 ppm CO₂ auf 3.000 ppm CO₂ und zurück auf O ppm CO₂ nach einer entsprechenden Ansteuerung wie etwa eine neue Sonde. Anschaulich gezeigt ist somit ein Beispiel der Wirkweise des Vorgehens bei einer CO₂-Messung mit BaCO₃ als Sensorschicht und einer Auslesung der Austrittsarbeit. Die dargestellte Kurve der neuen Schicht zeigt ein gutes Ansprechverhalten auf die zu detektierenden Konzentrationen, eine alte Schicht zeigt ein schlechtes bzw. nicht mehr verwertbares Ansprechverhalten mit einem fast konstanten Austrittsarbeitspotential. Durch Regeneration über Protonenentzug, d. h. die Zugabe von OH⁻, wird das ursprüngliche sensitive Verhalten wieder hergestellt, wie dies mit Hilfe der dritten, gestrichelten Kurve dargestellt ist.

Natürlich sind die wesentlichen Komponenten eines solchen Sensors 1, welche allein zur Umsetzung des Verfahrens ausreichend sind, bereits ein Träger mit einer derartigen Sensorschicht 9, einer als Gate 5 dienenden Elektrode sowie einer Elektrodenanordnung entsprechend dem Guard-Ring 10 und der Steuerelektrode 13 mit entsprechenden Anschlüssen 15 als Steuereingang 15 zum Anlegen des Steuersignals U_{c}.

Anhand der Fig. 4A und 4B sind besonders einfache Ausführungsformen eines Sensors 1' dargestellt. Bei diesen und den übrigen Figuren werden zur Vereinfachung vorzugsweise nur die Sensorelemente und Sensorfunktionen beschrieben, welche sich von den ansonsten beschriebenen unterscheiden. Insbesondere stehen gleiche Bezugszeichen für gleich wirkende oder gleichartige Elemente.

Fig. 4A stellt eine Ausführungsform dar, bei der die sensitive Sensorschicht 9, die den eigentlichen Reaktionsbereich ausbildet von dem Sensorelement beabstandet angeordnet ist (SGFET). Die Beabstandung erfolgt über einen Spalt 17, der als Durchleitungspassage für das gasförmige Medium dient. Auf der sensitiven Schicht 9 sind wiederum der Guardring 10 sowie eine Referenzelektrode als Steuerelektrode angeordnet. Bei dem dargestellten Ausführungsbeispiel sind diese Elektroden 10, 13 auf der Oberfläche der sensitiven Schicht aufgebracht und stehen von dieser ab. Der Feuchtefilm 16 bildet sich entsprechend in einem Bereich auf der Oberfläche der sensitiven Schicht 9, wobei der Feuchtefilm 16 sowohl den Reaktionsbereich der Oberfläche als auch zumindest die seitlichen und elektrisch leitenden Flanken des Gaterings 10 benetzt. Durch das Anlegen einer Steuerspannung an den Guard-Ring 10 findet wiederum eine Modifikation des pH-Wertes in dem Feuchtefilm 16 auf elektrochemischem Weg statt.

Der beschriebene Sensor detektiert die Potentialveränderung aufgrund einer Änderung der Austrittsarbeit.

Auch bei diesem Ausführungsbeispiel findet wiederum eine pH-Wert-Änderung im Feuchtefilm und/oder in der Sensorschicht aufgrund der Reduktion oder Oxidation von Wasser in der Umgebung des Guardrings 10 und damit im sensitiven Material statt, wenn eine Spannung zwischen dem Guardring , der vorzugsweise aus Edelmetall, z. B. Platin oder Palladium, besteht, und der Referenzelektrode 13, die beispielsweise aus Silber oder Silberchlorid besteht, angelegt wird. Insbesondere die Reaktion von Bariumcarbonat BaCO₃ ist auf ein Kohlendioxyd CO₂ enthaltendes gasförmiges Medium stark pH-abhängig. Durch das Anlegen der Spannung findet am Guard-Ring 10 eine elektrochemische Reaktion statt, die Protonen oder OH- Ionen erzeugt gemäß

(O₂ + 2H₂O⁻ + 2e → H₂O₂ + 2OH⁻)

Dadurch findet im Reaktionsbereich auf der Sensorschicht 9, d. h. über oder gegenüberliegend des Gate 5 des ISFET eine Ansäuerung statt.

Vorteilhafterweise hat die Referenz- bzw. Steuerelektrode 13 ein um Größenordnungen größeres Volumen, so dass die pH-Änderung an der Steuerelektrode 13 nicht so stark ist wie am Guard-Ring 10. Es ist aber auch ausreichend, eine einfache Gegenelektrode als Steuerelektrode zu benutzen. Als Größe des Guard-Rings 10 oder einer oder mehrerer, in einfachen Fällen auch punktförmiger oder geradliniger Elektroden, wird vorzugsweise eine Mikroelektrode oder Nanoelektrode gewählt, um die elektrochemischen Eigenschaften von Mikroelektroden für diesen Fall nutzen zu können. Dies bringt einen kleineren Strom und somit einen geringeren Stromabfall mit sich.

Beispielsweise ist auch die Bestimmung des Sauerstoffgehalts in Flüssigkeiten an einem Guard-Ring durch das Anlegen einer entsprechenden Reduktionsspannung des Sauerstoffs, insbesondere somit ca. -700 mV gemäß vorstehender Formel möglich. Sauerstoff wird dadurch zu OH⁻ reduziert, wobei der ISFET 2 gemäß vereinfachter Darstellung detektiert.

(O₂ + 2H₂O⁻ + 2e → H₂O₂ + 2OH⁻)

Möglich ist auch das Anlegen positiveren Spannungen, z. B. +700 mV, um elektropositivere Stoffe zu oxidieren. Dabei entstehen Protonen H⁺, welche wiederum mit dem ISFET 2 detektiert werden können, beispielsweise gemäß:

(NO + H₂O → NO₂⁻ + H⁺ + e⁻.)

Beim Anlegen von noch höheren negativen Spannungen wird Wasser zu OH- reduziert und bei noch positiveren Spannungen wird Wasser zu H⁺ oxidiert.

Eine besonders einfache Ausführungsform besteht entsprechend gemäß Fig. 4B aus einem Träger 7, in den ein ISFET 2 eingebettet ist. Auf der gemeinsamen, vorzugsweise ebenen Oberfläche des Trägers 7 und des ISFET 2 sind eine oder mehrere Referenz- bzw. Steuerelektroden 13 und eine oder mehrere Ansteuer-, Schutz- bzw. Guard-Ring-Elektroden 10 angeordnet. Im Betrieb, d. h. bei Zufuhr eines gasförmigen Mediums mit einem Feuchtegehalt bildet sich auf der Oberfläche des Trägers 7 ein Feuchtefilm 16, der sich zwischen der Steuerelektrode 13 und dem Guard-Ring 10 sowie in dem Reaktionsbereich 9 innerhalb des Guard-Rings 10 erstreckt. Mit einer solchen Anordnung kann beispielsweise unter zu Hilfenahme von Henry's Gesetz (die Menge eines Gases in einer Flüssigkeit ist proportional zum Gasdruck mit welchem die Flüssigkeit im Gleichgewicht steht) eine Aussage über den Sauerstoffgehalt in der Umgebung dieser Anordnung getroffen werden. Dabei kann das Trägermaterial und auch der Reaktionsbereich auch ohne Bariumcarbonat BaCO₃ ausgebildet werden, welches bei der ersten beschriebenen Ausführungsform als Sensorschicht verwendet ist.

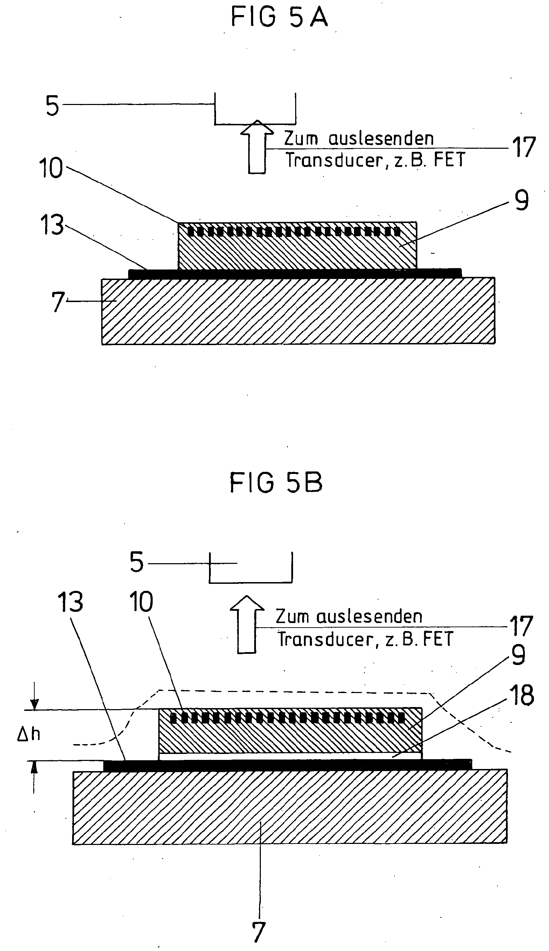

Die Fig. 5A und 5B stellen Querschnitte durch Anordnungen mit relativ dicken sensitiven Schichten 9 dar. Im oberen Bereich der Sensorschicht 9 eingebettet oder auf dieser aufsitzend ist eine erste Elektrode 10 der Elektrodenanordnung zum Anlegen der Steuerspannung angeordnet. Von dieser ersten Elektrode 10 beabstandet ist die zweite Elektrode 13 der Elektrodenanordnung ausgebildet. Die Sensorschicht 9 sitzt somit mit ihrer Unterseite auf der zweiten, vorzugsweise flächigen Elektrode 13. Die zweite Elektrode 13 sitzt vorteilhafterweise auf einem Träger 7. Zum Auslesen einer Veränderung der charakteristischen Größe, d. h. insbesondere des pH-Wertes im Feuchtigkeitsfilm 16, welcher die Sensorschicht 9 umgibt, dient wiederum ein Transducer, vorzugsweise ein Feldeffekttransistor. Dieser ist von der Sensorschicht 9 durch einen Spalt 17 beabstandet so angeordnet, dass er der Elektrodenanordnung 10, 13 gegenüber liegt.

Bei dieser Anordnung wird somit eine rückseitige Elektrode 13 verwendet, die flächig ausgebildet sein kann. Die Gegenelektrode 10 wird vorteilhafterweise durch ein verbundenes Netz von einzelnen Elektroden, beispielsweise in Form einer Kammstruktur, ausgebildet. Die erste Elektrode befindet sich dabei im Bereich der Oberfläche der Sensorschicht 9, wo das Sensorsignal, welches von dem geeignet angeordneten Transducer ausgelesen wird, erzeugt wird. D. h. der dort generierte pH-Wert beeinflusst den gasempfindlichen Teil der Anordnung und damit das sensitive Verhalten. Eine entgegengesetzte pH-Wert-Veränderung an der zweiten, vom Spalt 17 beabstandeten Elektrode 13 befindet sich nicht im signalbestimmenden Teil der sensitiven Sensorschicht 9 und bleibt für das gassensitive Verhalten vorteilhafterweise ohne Auswirkung.

An der ersten Elektrode 10, welche der das gasförmige Medium heranführenden und die Feuchte tragenden Oberfläche der Sensorschicht 9 zugewandt ist, kann sich bei einem Langzeitbetrieb eine unerwünschte Akkumulation von Säure oder Base ausbilden. Dies ist beispielsweise dann der Fall, wenn andauernd durch die Umgebung eine saure Belegung auftritt, d. h. zugleich an der zweiten Elektrode eine Base zur Kompensation auftritt. In diesem Fall wird sich an der ersten Elektrode ein zunehmend saures Milieu ausbilden. Um solche Langzeiteffekte zu eliminieren, kann in der Umgebung zumindest einer der Elektroden 10, 13 ein entsprechender chemischer Puffer angeordnet werden, der eine solche unerwünschte Ansammlung an der dem Puffer benachbarten Elektrode verhindert. Fig. 5B zeigt beispielsweise einen Puffer 18 zwischen der Sensorschicht 9 und der zweiten Elektrode 13.

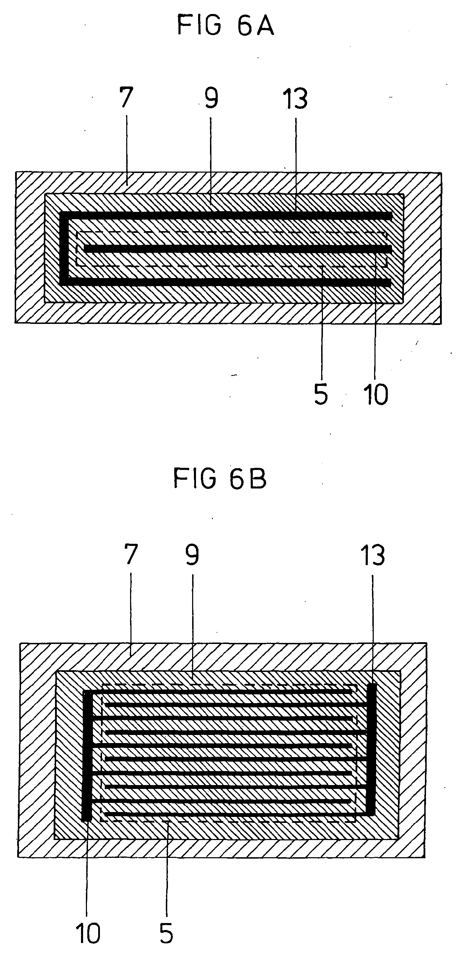

Fig. 6A stellt eine weitere Ausführungsform dar, welche eine pH-Steuerung nur im ausgelesenen Bereich der Schicht durchführt. In dem Substrat 7 ist dabei wiederum ein Auslese-Transducer, beispielsweise mit einem Gate 5 eines ISFET angeordnet. Über dem Substrat 7 und dem Auslese-Transducer ist die sensitive Schicht 9 angeordnet, welche eine Elektrodenanordnung aus einer beim dargestellten Beispiel linearen ersten Elektrode 10 und einer diese U-förmig umgreifenden zweiten Elektrode 13 trägt. Der bei dieser Anordnung aktive Reaktionsbereich befindet sich im Umfeld der ersten Elektrode 10 bzw. in der Sensorschicht 9 unterhalb und schräg unterhalb der ersten Elektrode 10. Bei dieser Anordnung wird nur der von der ersten Elektrode 10 erfasste Schichtbereich des Transducers ausgelesen. Der von der zweiten Elektrode 13 betroffene Schichtbereich der Sensorschicht 9 ist in diesem Fall lateral separiert. Auch bei diesem Ausführungsbeispiel kann bei insbesondere der zweiten Elektrode 13 wiederum ein Puffer angeordnet werden.

Hervorzuheben ist auch der Fall, bei dem die entgegengesetzte pH-Verschiebung auftritt. An der äußeren Elektrode 13 bewirkt dieser Fall keinen störenden Messeffekt sondern nur eine Unterdrückung des Messeffektes. Dies ermöglicht insbesondere auch den Einsatz interdigitalförmiger Elektroden, wobei der von der ersten Elektrode erfasste Schichtbereich der Sensorschicht 9 ein Sensorsignal erzeugt, der von der zweiten Elektrode 13 erfasste Bereich jedoch nicht zum Signal beiträgt.

Besonders vorteilhaft sind Anordnungen, bei denen die Fertigung des Sensors mit Hilfe eines üblichen Halbleiter-Herstellungsverfahrens durchgeführt wird, wobei mit Blick auf die Oberflächentopologie auf einen möglichst glatten Verlauf geachtet wird. Höhenunterschiede im Bereich des Reaktionsbereiches und der dazu benachbarten Elektrodenanordnung zum Anlegen der Steuerspannung sollten so niedrig ausgearbeitet werden, dass der Feuchtefilm 16 die einzelnen Bereiche durchgehend überzieht. Unter einer durchgehenden Überziehung wird verstanden, dass durch das angelegte Potential die Oxidation bzw. Reduktion von Wasser oder einem anderen geeigneten Feuchtefilmmedium 16 durchgeführt werden kann. Derzeit übliche Oberflächentopologien sollten daher Höhenunterschiede aufweisen, die einen typischen Feuchtefilm 16 mit einer Mächtigkeit von wenigen Nanometern ermöglichen. Besonders vorteilhaft ist dabei eine Oberflächentopologie, welche scharfe Kanten, die zu einem Abriss des durchgehenden Feuchtefilms 16 führen können, vermeidet. Stufen der Oberflächentopologie oder Radien von abgerundeten Höhenniveauübergängen sollten in diesem Fall wenige Nanometer bis wenige 10er Nanometer nicht überschreiten. Bei der Verwendung von besonders feuchten Gasen oder einer hohen Umgebungsfeuchte mit entsprechend mächtiger ausgebildeten Feuchtefilmen 16 auf der Sensorschicht können diese Dimensionen entsprechend größer ausfallen und durchaus auch in zumindest den Mikrometerbereich reichen.

## Patentansprüche

1. Verfahren zum Bestimmen eines chemischen Elementes oder einer chemischen Verbindung in einem gasförmigen Medium, welches einem Sensor (1) zum Erfassen einer Veränderung in einem Reaktionsbereich (9) zugeführt wird,
**dadurch gekennzeichnet, dass**
die chemische Zusammensetzung in dem Reaktionsbereich (9) des Sensors (1) durch das Anlegen oder Ändern einer Steuerspannung (U_{c}) an einem Feuchtefilm (16) über und/oder in dem Reaktionsbereich aktiv geändert wird.

2. Verfahren nach Anspruch 1, **dadurch gekennzeichnet, dass** die chemische Zusammensetzung elektrochemisch geändert wird.

3. Verfahren nach Anspruch 1 oder 2, **dadurch gekennzeichnet**, dasseine charakteristische Größe für die Bestimmung des zugeführten chemischen Elementes bzw. der zugeführten chemischen Verbindung durch die Auswahl der Steuerspannung (U_{c}) auf einem gewünschten, insbesondere konstanten Basiswert für die Bestimmung eines bestimmten chemischen Elementes oder einer bestimmten chemischen Verbindung gehalten wird (S1 - S5).

4. Verfahren nach einem der Ansprüche 1 bis 3, **dadurch gekennzeichnet, dass**
die Steuerspannung (U_{c}) zum Prüfen der Funktionalität des Sensors (1) variiert und zumindest ein erhaltener Ausgangswert (U_{DS}) hinsichtlich einer Abweichung gegenüber einem Referenzwert überprüft wird (S10 - S18).

5. Verfahren nach einem der Ansprüche 1 bis 4, **dadurch gekennzeichnet, dass**
die Steuerspannung (U_{c}) zum Einstellen einer Sensitivität des Sensors (1) zum Bestimmen eines gewünschten chemischen Elementes oder einer gewünschten chemischen Verbindung eingestellt wird (S20 - S23).

6. Verfahren nach einem der Ansprüche 1 bis 5, **dadurch gekennzeichnet**, dassin dem Feuchtefilm (16) durch die Steuerspannung eine pH-Wertänderung durch Reduktion oder Oxydation von Wasser oder anderen im Feuchtefilm befindlichen Stoffen erzeugt wird.

7. Sensor (1) zum Bestimmen eines chemischen Elementes oder einer chemischen Verbindung (CO₂) in einem zugeführten gasförmigen Medium mit
- einem Reaktionsbereich (9), auf und/oder in dem das Element bzw. die Verbindung eine chemische Reaktion bewirkt, welche eine charakteristische Größe des Reaktionsbereichs (9) ändert,
- einem Sensorelement (5), das in dem Sensor (1) zum Erfassen der Änderung der charakteristischen Größe angeordnet ist,
- einem Signalausgang (11), an dem als Messgröße ein Ausgangssignal (U_{DS}) entsprechend der vom Sensorelement erfassten chemischen Reaktion abgreifbar ist, und
- einer Reaktions-Steuereinrichtung (SC, 12) mit einer Elektrodenanordnung (10, 13) zum Anlegen einer Steuerspannung zum Beeinflussen einer Reaktion im Reaktionsbereich (9),
**dadurch gekennzeichnet, dass**
- eine Oberflächentopologie/Chemie derart dimensioniert/ ausgebildet ist, dass im Betrieb ein Feuchtefilm (16) aus niedergeschlagener Feuchte den Oberflächenbereich zwischen mindestens zwei Elektroden (10 und 13) der Elektrodenanordnung und dem Reaktionsbereich durchgehend überzieht und/oder den Reaktionsbereich (9) in diesem Bereich durchzieht.

8. Sensor nach Anspruch 7, **dadurch gekennzeichnet, dass** die chararakteristische Größe die Austrittsarbeit ist.

9. Sensor nach Anspruch 7, **dadurch gekennzeichnet, dass** es sich um eine SGFET Anordnung handelt.

10. Sensor nach Anspruch 7-9, **dadurch gekennzeichnet, dass**
die Reaktions-Steuereinrichtung (12) als Stabilisierungseinrichtung zum elektrochemischen Ändern der charakteristischen Größe in der Sensorschicht (9) ausgebildet ist.

11. Sensor nach Anspruch 10, **dadurch gekennzeichnet, dass**
die Stabilisierungseinrichtung (12) zum Stabilisieren der charakteristischen Größe, insbesondere eines pH-Wertes, durch Ausgleichen von Störeinflüssen ausgebildet ist.

12. Sensor nach einem der Ansprüche 7 - 20, **dadurch gekennzeichnet, dass**
die Reaktions-Steuereinrichtung (12) zum Überprüfen der Sensorfunktion als eine Prüfeinrichtung zum aktiven Ändern der charakteristischen Größe und Messen der Änderung des Ausgangssignals (U_{DS}) ausgebildet ist.

13. Sensor nach einem der Ansprüche 7 - 12, **dadurch gekennzeichnet, dass**
die Reaktions-Steuereinrichtung (12) als Prüfeinrichtung zum Vergleichen des zumindest einen gemessenen Ausgangssignals (U_{DS}) mit zumindest einem Referenzwert ausgebildet ist.

14. Sensor nach einem der Ansprüche 7 - 13, **dadurch gekennzeichnet, dass**
die Reaktions-Steuereinrichtung (12) als Sensitivitätseinstellungseinrichtung zum aktiven Ändern der charakteristischen Größe zum Bestimmen eines gewünschten chemischen Elementes bzw. einer bestimmten chemischen Verbindung aus einer Vielzahl verschiedener bestimmbarer Elemente bzw. Verbindungen ausgebildet ist.

15. Sensor nach Anspruch 14, **dadurch gekennzeichnet, dass**
die Reaktions-Steuereinrichtung (12) zum Einstellen der Sensitivität eine Referenztabelle mit Referenzwerten für die Steuerspannung (U_{c}) aufweist.

16. Sensor nach einem der Ansprüche 7 - 15, bei dem
die Reaktions-Steuereinrichtung zum Ändern des Verhältnisses von Wasserstoffionen (H⁺) oder einer OH-Gruppe (OH⁻) in und/oder auf der Sensorschicht (9) ausgebildet ist.

17. Sensor nach einem der Ansprüche 7 - 15, mit
einer Elektrodenanordnung (10, 13) zum Anlegen einer Steuerspannung (U_{c}) in dem Reaktionsbereich (9), wobei die Elektrodenanordnung (10, 13) einer Elektrode (5) zum Abgreifen eines Ausgangssignals oder eines Messwertes für eine Änderung der charakteristischen Größe benachbart ist.

18. Sensor nach einem der Ansprüche 7 - 16, bei dem das Sensorelement (2 - 5) als ein Ionen-selektiver Feldeffekttransistor oder als CCFET ausgebildet ist.

19. Sensor nach Anspruch 18, bei dem das Sensorelement (5) durch das Gate (5) des Feldeffekttransistors (2) ausgebildet ist.

20. Sensor nach einem der Ansprüche 7 - 19, bei dem der Reaktionsbereich als eine Sensorschicht (9) zwischen Feuchtefilm (16) und Sensorelement (2) angeordnet ist.

21. Sensor nach einem der Ansprüche 7 - 20, bei dem zwischen dem Reaktionsbereich (9) und dem Sensorelement (5) eine Durchtrittspassage (17) für das gasförmige Medium angeordnet ist.

22. Sensor nach einem der Ansprüche 7 - 21, bei dem sich die Oberflächentopologie im Bereich des durchgehenden Feuchtefilms (16) über einen Höhenbereich (Δh) im Nanometer-Bereich, insbesondere im Bereich von 0,1 bis 100 Nanometern erstreckt.

23. Sensor nach einem der Ansprüche 7 - 22, bei dem die Oberflächentopologie im Bereich des durchgehenden Feuchtefilms (16) über eine Kanten- oder Stufenhöhe (Δh) kleiner einer Höhe des Feuchtefilms (16), insbesondere im Bereich weniger Nanometer erstreckt.

24. Sensor nach einem der Ansprüche 7 - 23, bei dem die Oberflächentopologie im Bereich des durchgehenden Feuchtefilms (16) kantenfreie, abgerundete Höhenübergänge zwischen verschiedenen Oberflächen-Höhenstufen aufweist, insbesondere eine Oberflächen-Rundung einen Rundungsradius im Bereich weniger Nanometer bis weniger 10er Nanometer aufweist.

25. Sensor nach Anspruch 7-24, **dadurch gekennzeichnet, dass** sich hydrophile Schichten im Bereich zwischen den Elektroden (10 und 13) und Reaktionsbereich (9) befinden

26. Sensor nach einem der Ansprüche 7 - 25, bei dem die Elektrodenanordnung zum Anlegen der Steuerspannung aus zumindest zwei interdigital ineinander eingreifenden Elektroden (10,13) ausgebildet ist.

27. Sensor nach einem der Ansprüche 7- 26, bei dem der Rektionsbereich eine vom Feuchtefilm (16) überzogene sensitive Schicht (9) aufweist, in oder auf der zumindest eine Elektrode (10) der Elektrodenanordnung angeordnet ist, wobei das Sensorelement durch eine Durchtrittspassage (17) für das gasförmige Medium von dem Feuchtefilm (16) beabstandet angeordnet ist.

28. Sensor nach Anspruch 27, bei dem eine zweite Elektrode (13) der Elektrodenanordnung von der ersten Elektrode (10) der Elektrodenanordnung beabstandet und innerhalb der sensitiven Schicht (9) oder außerhalb der sensitiven Schicht und von dem Feuchtefilm (16) beabstandet angeordnet ist.

29. Sensor nach Anspruch 28, bei dem zwischen der zweiten, von der sensitiven Schicht (9) beanstandeten Elektrode (13) der Elektrodenanordnung und der sensitiven Schicht eine Pufferschicht (18) zum Verhindern einer Säureakkumulation angeordnet ist.

30. Sensor nach einem der Ansprüche 7 - 29 zum Durchführen eines Verfahrens nach einem der Ansprüche 1 - 6.

31. Verfahren nach einem der Ansprüche 1 - 6 oder Sensor nach einem der Ansprüche 7 - 230, wobei das gasförmige Medium ein Feuchte enthaltendes Gas oder Fluid ist.

32. Verfahren zum Herstellen eines Sensors (1) nach einem der Ansprüche 7 - 29, bei dem die Oberflächentopologie derart dimensioniert ausgebildet wird, dass im Betrieb ein natürlicher Feuchtefilm (16) aus niedergeschlagener Umgebungsfeuchte den Oberflächenbereich über sowohl einer Elektrodenanordnung zum Anlegen einer Steuerspannung (U_{c}) als auch einem Reaktionsbereich (9) für eine chemische Reaktion eines gasförmigen Mediums (CO₂) durchgehend überzieht.
